# EUROPEAN PATENT SPECIFICATION

(11) **EP 3 775 854 B1**
(45) Date of publication and mention of the grant of the patent: **22.02.2023**
(21) Application number: 19723210.1
(22) Date of filing: 09.04.2019
(51) Int. Cl.: G01N 21/88, G01N 21/95, G06T 7/00, G01B 11/30

(54) **SYSTEM FOR THE DETECTION OF DEFECTS ON A SURFACE OF AT LEAST A PORTION OF A BODY AND METHOD THEREOF**
SYSTEM ZUM ERKENNEN VON DEFEKTEN AUF EINER OBERFLÄCHE VON MINDESTENS EINEM TEIL EINES KÖRPERS UND VERFAHREN DAFÜR
SYSTÈME DE DÉTÉCTION DE DEFAUTS SUR UNE SURFACE D'AU MOINS UNE PARTIE D'UN CORPS ET PROCÉDÉ CORRESPONDANT

(30) Priority: 10.04.2018 IT 201800004368
(43) Date of publication of application: 17.02.2021
(73) Proprietor: Scuola Superiore di Studi Universitari e di Perfezionamento Sant'Anna, 56127 Pisa (IT); Robot System Automation S.R.L., 56035 Perignano Fraz. Casciana Terme Lari (IT); Piaggio & C. S.P.A., 56025 Pontedera Pisa (IT)
(72) Inventor: BIANCHI, Marco, 56012 Calcinaia (PI) (IT); CIUTI, Gastone, 56125 Pisa (IT); DARIO, Paolo, 56042 Crespina Lorenzana (PI) (IT); CZIMMERMANN, Tamás, 56127 Pisa (IT); MILAZZO, Mario, 56127 Pisa (IT); ODDO, Calogero Maria, 56125 Pisa (IT); ROCCELLA, Stefano, 57127 Livorno (IT); CHIURAZZI, Marcello, 56127 Pisa (IT); FARNIOLI, Edoardo, 16149 Genova (IT); MINUTILLO, Marco, 56031 Bientina (IT); BONILLA JIMENEZ, Jose' Manuel, 56035 Perignano Fraz. Casciana Terme Lari (IT); MASSARI, Luca, 00179 Roma (IT); CAMBONI, Domenico, 56025 Pontedera (IT); CARROZZA, Maria Chiara, 56100 Pisa (IT); STEFANINI, Cesare, 56021 Cascina (PI) (IT); LEONI, Fabio, 57014 Vicarello (LI) (IT); BRAY, Davide, 55012 Marlia (LU) (IT); RIZZO, Tommaso, 56100 Pisa (IT); BRUNI, Francesco, 41037 Mirandola (MO) (IT); COLLODI, Lorenzo, 55011 Altopascio (LU) (IT)
(74) Representative: Celestino, Marco
(86) International application number: PCT/IB2019/052900
(87) International publication number: WO 2019/197981

(56) References cited:
- WO-A1-87/00629
- WO-A2-2017/081029
- YUN CHAN CHUNG ET AL: "Visualization of Subtle Defects of Car Body Outer Panels", SICE-ICCAS 2006 INTERNATIONAL JOINT CONFERENCE, IEEE, PISCATAWAY, NJ, USA, 1 October 2006 (2006-10-01), pages 4639-4642, XP031050254, ISBN: 978-89-950038-4-8
- PARISA KAMANI ET AL: "Car Body Paint Defect Inspection Using Rotation Invariant Measure of the Local Variance and One-Against-All Support Vector Machine", INFORMATICS AND COMPUTATIONAL INTELLIGENCE (ICI), 2011 FIRST INTERNATIONAL CONFERENCE ON, IEEE, 12 December 2011 (2011-12-12), pages 244-249, XP032104332, DOI: 10.1109/ICI.2011.47 ISBN: 978-1-4673-0091-9

## Description

### Field of the invention

The present invention relates to a system and a method for identifying, classifying and subsequently removing manufacturing defects present on vehicle components.

### Description of the prior art

A problem felt in the field of vehicle production concerns the identification of possible surface defects that can occur in body parts.

Generally the industry, in order to fulfil this need, makes use of an experienced operator whose job is to visually inspect a vehicle or parts of it in order to identify defects, such as surface depressions, scratches or other types in order to suggest interventions of targeted correction. However, such an inspection has the limitation of being highly subjective as well as being conditioned by environmental factors, such as the presence of light reflections on the piece to be inspected, and is therefore not very reliable and not repeatable.

To overcome the aforementioned drawbacks, solutions have been devised which make use of automatic systems for identifying the defect, through the use of optical sensors adapted to acquire information on the geometry of the scanned area and to perform a two-dimensional or three-dimensional reconstruction of the defect in order to compare it with one or more predetermined geometries.

US6320654B1 describes an automatic system for detecting defects on the bodies of unpainted vehicles. In particular, the inspection is performed on vehicles assembled and moved along a conveyor line, by projecting light grids on the area of interest. Data on the reflection mode of the area of interest are then extrapolated to evaluate the geometry of the defect and allow its cataloguing by comparison with a database.

EP2109079A1 describes a further method for recognizing defects on parts intended to be processed. The method comprises a step of acquiring the geometric profile of the defect by acquiring a two-dimensional image and evaluating the colour gradient to extrapolate a three-dimensional conformation.

US6714831B2 describes a further method for recognizing defects in bodywork parts of painted vehicles. This method also uses optical sensors to scan the surface and obtain a three-dimensional image. This image is then compared with a respective CAD image to repair any identified defect.

However, all the systems described above make a mere comparison of the image acquired with a reference model, evaluating the degree of correspondence and establishing the most suitable defect category to represent the scanned defect. These systems are therefore very rigid in adapting both to defect geometries that are not clearly comparable to predetermined categories, and to the acquisition of defects that are not already catalogued.

Therefore, the use of these systems is strongly limited to standard defects, easily recognizable, and in particularly favourable light conditions, not allowing a quality and an efficiency of this operation like that achieved by a human operator.

Document WO2017081029A2 tries to solve the aforementioned problems, by means of a more adaptable recognition system. This document proposes a method and an automatic system for the identification and correction of defects on the bodywork of the painted vehicle, which, after having carried out an inspection by cameras and having reconstructed a three-dimensional geometry of the defect, extrapolates some mathematical parameters relating to this geometry and evaluates them using a dedicated algorithm, to catalogue the defect more accurately than the previous documents.

However, this system is specifically geared to the application on painted bodies. In fact, since the inspection of the bodywork is carried out by means of cameras, the reconstruction of the geometry is carried out by analysing the acquired pixels, resulting in an inadequate description of the defective area in unpainted shells. Consequently, the described algorithm is specifically based on the evaluation of mathematical parameters specific to painting defects, such as surface stains or non-homogeneous paints.

Moreover, due to the inspection method used, WO2017081029A2 is not able to assess the depth and shape of defects that do not produce shadows such as to be detected by comparing the colour of the pixels. Therefore, this system cannot be used for the detection of slight depressions or bumps in the bodywork.

Therefore, even this system is insufficient to obtain a defect recognition efficiency comparable to that of a human operator.

EP3187859A1 describes a system for detecting defects on a surface that, once a cloud of points has been calculated corresponding to the real geometry of the surface, compares it with a virtual 3D surface corresponding to the ideal model. If the real model deviates from the virtual model beyond a certain threshold, a defect is detected.

However, this system has several disadvantages.

Firstly, since the detection of the defect is obtained by comparison with a virtual 3D model, the method described in EP3187859A1 is not applicable to bodies not known a priori or of which there is no faithful virtual model.

Secondly, because, due to manufacturing tolerances, the surfaces of the bodywork may have deviations of even 1-2 mm from each other, referring to a virtual bodywork necessarily involves not being able to detect defects lower than this value. Otherwise, the EP3187859A1 system would risk detecting bodywork defects even if it is a simple deviation due to these tolerances. Therefore, this system does not allow to detect surface defects lower than the aforementioned deviation value.

Furthermore, during the assembly of the surfaces the bodies may have a further increase in these deviations, due to the sum of these tolerances. Therefore, on already assembled bodies, the method of EP3187859A1 results to have even less precision in the detection of defects.

Document WO1987000629A1 describes a system for inspection of bodywork surfaces by laser scanning. However, the described system does not provide a three-dimensional reconstruction of the analysed surface, resulting also insufficient to obtain a defect recognition efficiency comparable to that of a human operator.

Chung et al., in "Visualization of Subtle Defects of Car Body Outer Panels", Proceedings of SICE-ICCAS 2006 International Joint Conference; 18-21 Oct. 2006; Busan, Korea (South), pages 4639-4642, describes a system in which the curvature of adjacent points measured by a 3D scanner is calculated and applied to represent the scanned surface. Defects are visualised on the represented surface by a colour display method.

Kamani et al., "Car body paint defect inspection using rotation invariant measure of the local variance and one-against-all support vector machine", Proceedings of the 2011 First International Conference on Informatics and Computational Intelligence (ICI 2011), pages 244-249 describes a method to locate a defect region by using rotation invariant measure of the local variance (VAR) operator. Next, detected defects are classified into different defect types by using One-Against-All Support Vector Machine (OAA-SVM) classifier.

### Summary of the invention

It is therefore a feature of the present invention to provide a system for identification of defects on a surface of at least one portion of a body which is more versatile than the systems of the known art and which allows to identify and correct defects even not typical of the painted surfaces.

It is also a feature of the present invention to provide such a system that allows a more accurate reconstruction of the three-dimensional geometry of the defect, allowing a more focused and effective correction intervention.

These and other objects are achieved by a system for identification of defects on a surface of at least one portion of a body according to claim 1, said system comprising:
- an optical detection device arranged to acquire data on the three-dimensional shape of said surface;
- first moving means that is arranged to drive said optical detection device;
- at least one control unit arranged to:
   - localize said body with respect to a predetermined reference system ***S***;
   - actuate said first moving means for actuating said optical detection device along a trajectory ***γ*** defined with respect to said predetermined reference system ***S***;
   - receive said data on the three-dimensional shape of said surface from said optical detection device;
   - detect a possible defective area on said surface and define a three-dimensional geometry of said defective area;
   - query a database arranged to associate a plurality of three-dimensional geometries of defective areas to predetermined typologies of defects;
   - assign, on the basis of said database, a typology of defect to said defective area detected;

   said data on the three-dimensional shape of said surface comprising a cloud of points ***pᵢ*** of said surface, at each point ***pᵢ*** being associated coordinates **(*xᵢ*,*yᵢ*,*zᵢ*)** defined with respect to said reference system ***S***,
   said detecting a possible defective area comprising the steps of:
      - analysing said cloud of points ***pᵢ*** for extrapolating a three-dimensional virtual geometry of said surface;
      - associating said three-dimensional virtual geometry to a three-dimensional function ***f*** arranged to mathematically describe said surface;
      - analysing said three-dimensional function ***f*** for defining at least one defective area;
   whose main feature is that said analysis of said three-dimensional function ***f*** comprises the steps of:
      - deriving said three-dimensional function ***f*** obtaining a two-dimensional derivative function ***f*'**;
      - identifying, in said two-dimensional derivative function ***f*',** peaks ***kᵢ*** wherein said function ***f*'** has values higher than a predetermined threshold ***z_{T}***;
      - defining at least one region of interest ***R*** having an edge comprising a plurality of said peaks ***kᵢ***;
      - verifying that said region of interest ***R*** is a defective area.

Contrary to the known art, the present invention therefore allows to identify concavities or convexities present on the bodywork, and not only any paint imperfections.

In particular, the analysis of the function ***f*'** allows a very high level of accuracy in the analysis of the three-dimensional function ***f.***

In particular, said optical detection device comprises a laser scanner arranged to acquire said cloud of points ***pᵢ*** of said surface.

Such aspect allows a very high level of accuracy (of the order of a tenth of a mm) in the acquisition of the data on the three-dimensional shape of the surface and in generating the cloud of points ***pᵢ***.

Moreover, the laser has the advantage of not being affected by errors in areas of the body with recesses that are difficult to detect by a camera.

Advantageously, said first moving means comprises:
- at least two robotic links;
- at least one rotational joint arranged to provide a rotation ***θ*** between said at least two robotic links (121) to allow a handling of said laser scanner along said trajectory ***γ*;**
- at least one transducer of angular position which is adapted to measure said or each rotation ***θ*** of said or each rotational joint;
and wherein said control unit is arranged to:
- set a plurality of acquisition points ***γᵢ*,** along said trajectory ***γ*,** at which detecting said data on the three-dimensional shape of said surface comprising said cloud of points ***pᵢ*;**
   - set a time range ***τ*;**
   - at each time range ***τ*:**
- receive from said or each transducer of angular position said or each rotation ***θ*** of said or each rotational joint (125);
- on the basis of said or each rotation ***θ*,** carry out a calculation of a position of said laser scanner with respect to said trajectory ***γ*** and, therefore, with respect to said predetermined reference system ***S,*** said calculation of the position being made in a predetermined time of calculus ***ε* ≤ *τ*;**
- when said position of said laser scanner with respect to the trajectory ***γ*** corresponds to a point of acquisition ***γᵢ*:**
   - receive from said laser scanner said data on the three-dimensional shape of said surface;
   - associate said data on the three-dimensional shape of said surface to said point of acquisition ***γᵢ*.**

In this way, if the calculation of the position of the laser scanner with respect to the trajectory ***γ*** occurs in a time ***ε* ≤ *τ*,** the control unit always knows the position of the laser before receiving the new values of the rotations, guaranteeing the acquisition of the cloud of points at each acquisition point, in order to have a high precision in the association between the acquired cloud of points and the position of the laser along the trajectory ***γ***.

In particular, the control unit can comprise a FPGA [*Field Programmable Gate Array*]*,* which allows an optimal distribution of the hardware resources so as to never have a **condition *ε > τ.***

Advantageously, said optical detection device comprises at least one camera arranged to acquire visual data on the three-dimensional shape of said surface.

In particular, said optical detection device comprises a directional illumination source adapted to improve the quality of said visual data acquired by said camera.

The camera, in combination with the appropriately directed light source, allows to identify, thanks to an analysis of the two-dimensional image, any defects that may have escaped the laser scanner.

In particular, a tactile sensor is also provided arranged to acquire data relating to the roughness of the surface.

The tactile sensor makes it possible to integrate the data on the three-dimensional shape of the surface and to identify other typologies of defects in case that the laser scanner and/or the camera not were sufficient.

Advantageously, a defect removal device is also provided for carrying out a surface processing on said surface at least at one defective area.

In particular, said defect removal device comprises at least one force sensor suitable for allowing the calibration of the intensity and the point of application of the interaction force between said defect removal device and said surface.

This aspect allows a removal of the defect having accuracy at least equal to that which would be performed by an operator.

Advantageously, a second moving means is provided that is arranged to drive said defect removal device and said control unit is adapted to actuate said second moving means along a trajectory ***γ*'** defined with respect to said predetermined reference system ***S,*** on the basis of said step of localizing said body with respect to said predetermined reference system ***S*** and on the basis of said data on the three-dimensional shape of said surface.

This aspect allows a synchronization between the defect detection action and the defect removal action.

In particular, said control unit is also arranged for carrying out a step of training and building said database, by means of an acquisition of data on the three-dimensional shape of said surface at defective areas of which is known a three-dimensional geometry and a corresponding typology of defect.

This aspect allows to constantly improve the capabilities of the system, through a learning mechanism inspired by that of a human operator.

A method for identification of defects on a surface of at least one portion of a body according to claim 9, said method comprising the steps of:
- localizing said body with respect to a predetermined reference system ***S;***
- actuating said optical detection device along a trajectory ***γ*** defined with respect to said predetermined reference system ***S;***
- acquiring data on the three-dimensional shape of said surface by an optical detection device;
- detecting a possible defective area on said surface and defining a three-dimensional geometry of said defective area;
- querying and/or updating a database arranged to associate a plurality of three-dimensional geometries of defective areas to predetermined typologies of defects;
- assigning, on the basis of said database, a typology of defect to said defective area detected;

whose main feature is that said data on the three-dimensional shape of said surface comprise a cloud of points ***pᵢ*** of said surface, at each point ***pᵢ*** being associated a coordinates **(*xᵢ*,*yᵢ*,*zᵢ*)** defined with respect to said reference system ***S,***
and that said step of detecting a possible defective area comprises the steps of:
   - analysing said cloud of points ***pᵢ*** for extrapolating a three-dimensional virtual geometry of said surface;
   - associating said three-dimensional virtual geometry to a three-dimensional function ***f*** arranged to mathematically describe said surface;
   - deriving said three-dimensional function ***f*** obtaining a two-dimensional derivative function ***f*';**
   - analysing said three-dimensional function ***f*** for defining at least one defective area.
Said step of analysing said three-dimensional function ***f*** comprises the steps of:
   - identifying, in said two-dimensional derivative function ***f*',** peaks ***kᵢ*** wherein said function ***f*'** has values higher than a predetermined threshold ***z_{T}*;**
   - defining at least one region of interest ***R*** having an edge comprising a plurality of said peaks ***kᵢ*;**
   - verifying that said region of interest ***R*** is a defective area.

### Brief description of the drawings

Further characteristic and/or advantages of the present invention are more bright with the following description of an exemplary embodiment thereof, exemplifying but not limitative, with reference to the attached drawings in which:
- Fig. 1 shows in a schematic way an example of system of identification of defects, according to the present invention;
- Fig. 2 shows a possible exemplary embodiment of the system of identification of defects comprising the first moving means and the optical detection device;
- Fig. 3A shows in perspective view the optical detection device of Fig. 2;
- Fig. 3B shows in side view the optical detection device of Fig. 2;
- Fig. 4 shows a first exemplary embodiment of a method for detecting defects on a surface of at least one portion of body, according to the present invention;
- Fig. 5 shows a second exemplary embodiment of a method for detecting defects on a surface of at least one portion of body, according to the present invention;
- Fig. 6 graphically exemplifies some steps of the method for detecting defects according to the present invention.

### Description of a preferred exemplary embodiment

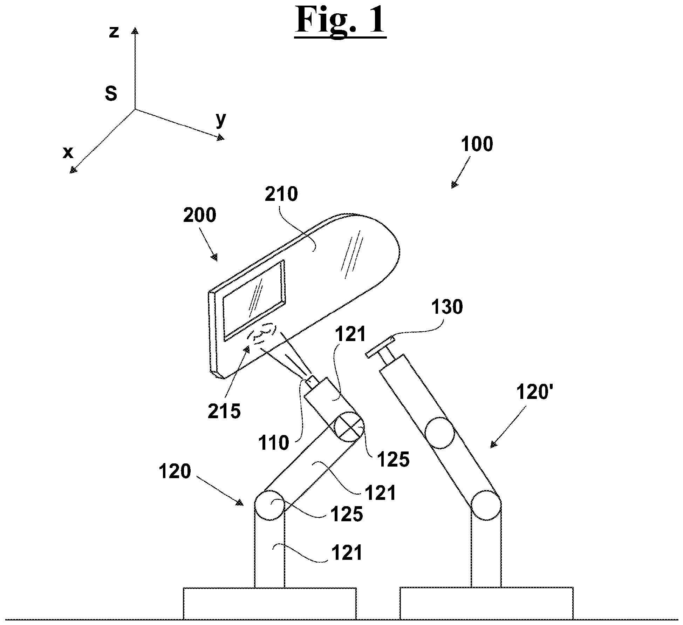

In Fig. 1 it is described an example of system 100 for identification of defects on a surface 210 of at least one portion of body 200.

The system 100 comprises an optical detection device 110 arranged to acquire data on the three-dimensional shape of the surface 210. The system 100 also comprises first moving means 120, for example a robotic arm with many degrees of freedom, arranged to drive the optical detection device 110 for inspecting the surface 210 of interest.

In an exemplary embodiment of the invention, furthermore, second moving means 120', for example a second robotic arm, can be provided arranged to drive a defect removal device 130, for example a grinder. The second robotic arm 120' is operated by a control unit, not shown in the figures, along a trajectory ***γ'*** defined with respect to a predetermined reference system ***S.***

Such control unit is adapted to carry out a plurality of steps for identification and the cataloguing the defect. In particular, the control unit is adapted to carry out the steps provided by the method as claimed by the present invention.

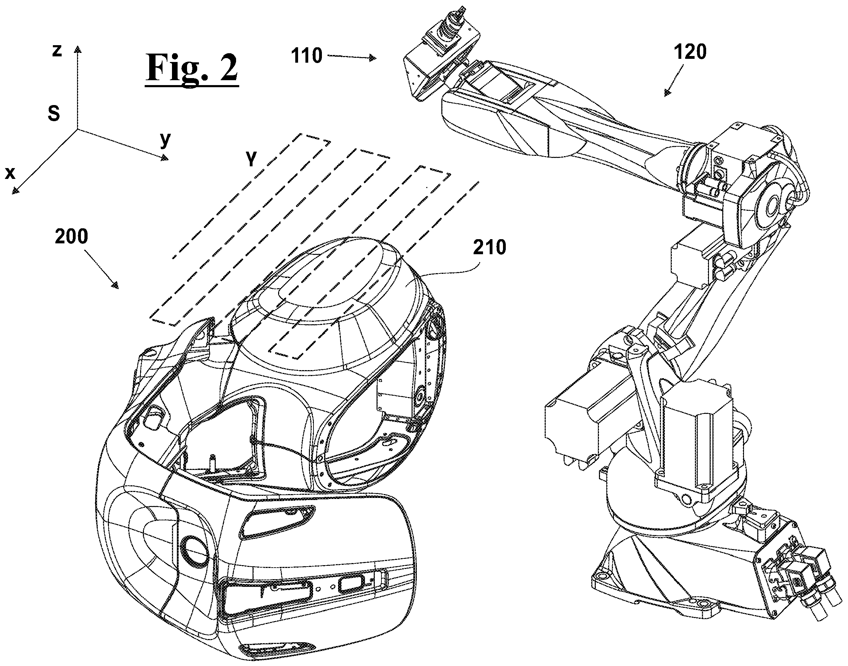

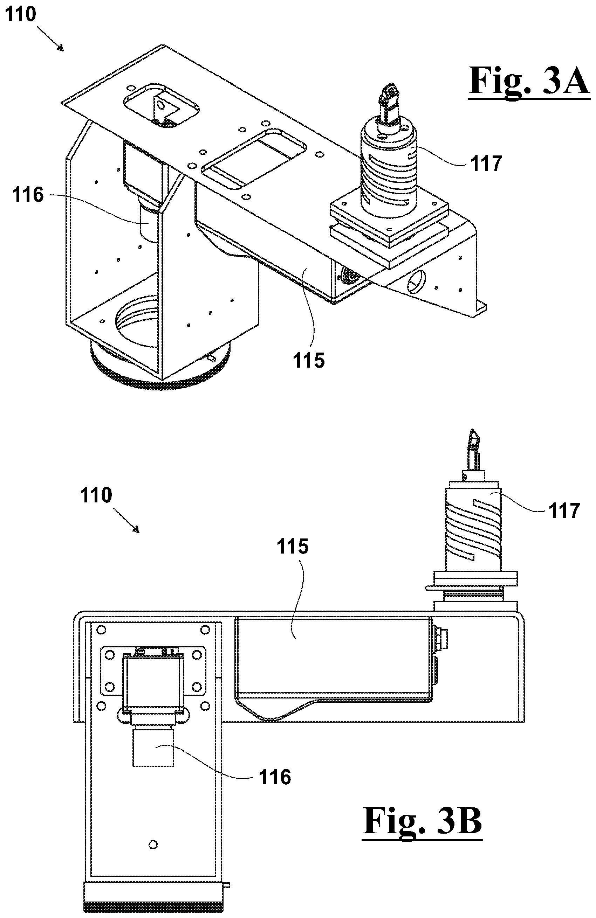

With reference to Figs. 2, 3A and 3B, in a preferred embodiment, the optical detection device 110 may comprise, alternatively or in combination:
- a laser scanner 115 arranged to acquire data relating to the spatial position of points of the surface 210;
- a camera 116 arranged to acquire visual data on the three-dimensional shape of the surface 210;
- a tactile sensor 117 arranged to acquire data relating to the roughness of the surface 210.

In particular, the first moving means 120 can be adapted to drive the optical detection device 110 in order to orient towards the surface 210 alternatively the laser scanner 115, the camera 116 and the tactile sensor 117, thus allowing the control unit to receive a combination of many data concerning the surface 210.

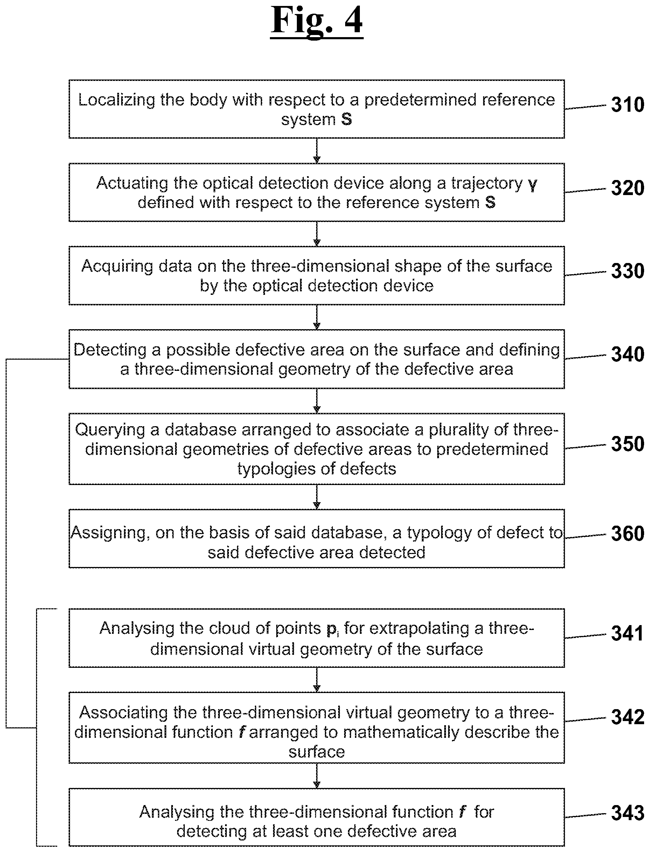

With reference to Fig. 4, in a first exemplary implementation of the method for identification of defects on a surface 210 of at least one portion of body 200, a first step is provided of localizing the body 200 with respect to a predetermined reference system ***S*** [301]. This phase allows to univocally associate the spatial coordinates relative to the position of the body within a work area.

There is then a step of actuating an optical detection device 110 along a trajectory ***γ*** defined with respect to the predetermined reference system ***S*** [320]. The optical detection device 110 used in this step is adapted to acquire data on the three-dimensional shape of the surface 210 and can comprise a laser scanner 115, for example mounted on a robotic arm capable of moving along a trajectory ***γ*** defined with respect to the reference system ***S.***

Then follows a step of acquiring data on the three-dimensional shape of the surface 210 by the optical detection device 110 [330]. In particular, the data comprise a cloud of points ***pᵢ*** of the surface 210, at each point ***pᵢ*** being associated coordinates **(*xᵢ*,*yᵢ*,*zᵢ*)** defined with respect to the reference system ***S.***

A step follows of defining a possible defective area 215 on the surface 210 and defining a three-dimensional geometry of the defective area [340].

In particular, the step of definition [340] comprises the steps of analysis of the cloud of points ***pᵢ*** for extrapolating a three-dimensional virtual geometry of the surface 210 [341], associating the three-dimensional virtual geometry to a three-dimensional function ***f*** arranged to mathematically describe the surface 210 [342] and analysing the three-dimensional function ***f*** for detecting at least one defective area 215 [343].

After the step of definition [340] a step is also provided of querying a database arranged to associate a plurality of three-dimensional geometries of defective areas to predetermined typologies of defects [350] and finally a step of assigning, on the basis of the database, a typology of defect to the defective area 215 detected [360].

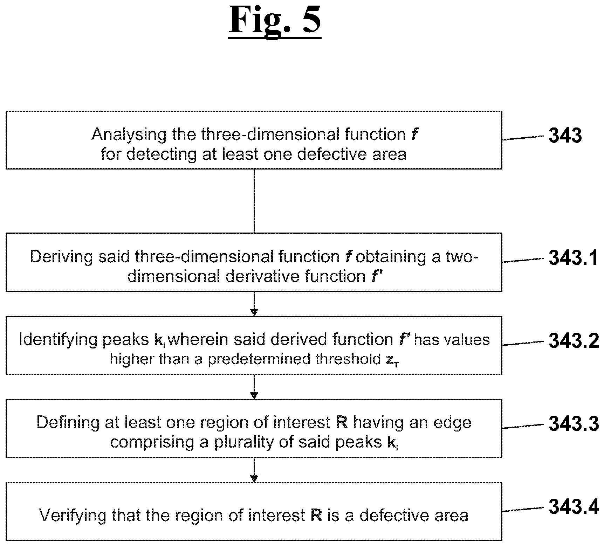

With reference to Fig. 5, in a preferred exemplary embodiment of the present invention, the step of analysis of the three-dimensional function ***f*** [343] comprises the steps of mathematical deriving the three-dimensional function ***f*** obtaining a two-dimensional derivative function ***f'*** [343.1], defining peaks ***kᵢ*** where the function ***f*'** has values higher than a predetermined threshold ***z_{T}*** [343.2], defining at least one region of interest ***R*** having an edge comprising a plurality of said peaks ***kᵢ*** [343.3], and verifying that the region of interest ***R*** is a defective area 215 [343.4].

By means of the aforementioned steps it is therefore possible to identify accurately, and through the analysis of the three-dimensional function ***f,*** possible defects which may occur on body surfaces.

The various types of defects that can be recognized and classified include scratches, surface corrosion, contamination, micro-punctures, surface bubbles, and other defects that are not efficiently recognizable from documents of known technique. Furthermore, the use of a laser scanner 115 for data acquisition, in the form of cloud of points ***pᵢ*** on the three-dimensional shape of the surface, overcomes the difficulties of the prior art devices inherent to the detection of non-uniformity of the surface, such as for example the presence of undercuts.

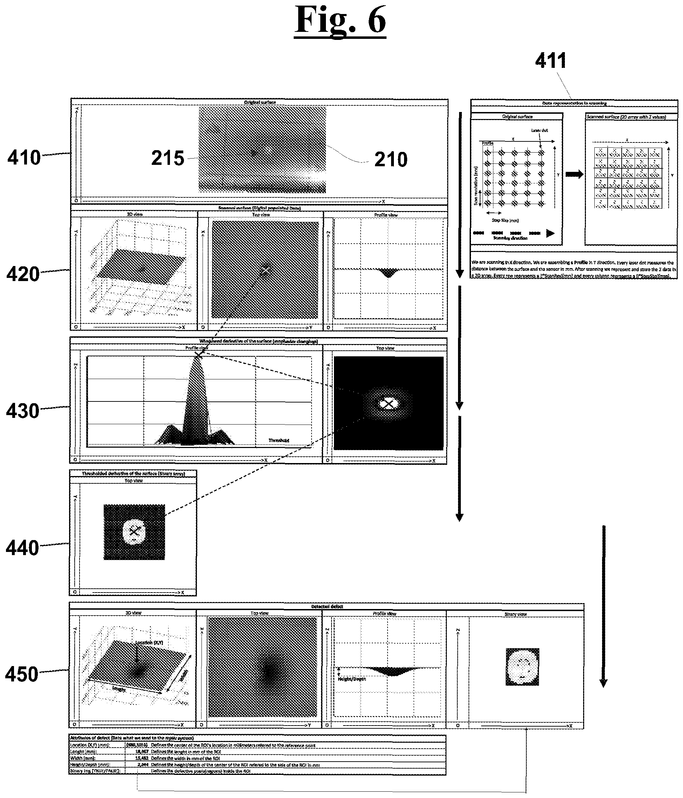

In Fig. 6 are graphically shown some steps of the method according to the diagrammatical view of Fig. 5.

In the panel 410 is shown an example of surface 210 having as a defective area 215 a dent. Surface 210 is subject to scanning by laser scanner. In particular, with reference also to panel 411, the surface 210 is scanned along the x direction of the graph and for each point ***pᵢ*** projected by the laser a coordinate z is detected. This way, the laser can measure the space position **(*xᵢ*,*yᵢ*,*zᵢ*),** with respect to the reference system ***S,*** of each point ***pᵢ*** of the surface 210, thus acquiring a cloud of points for reproducing the three-dimensional shape of the surface 210.

In the panel 420 it is therefore shown the three-dimensional function ***f,*** obtained starting from the cloud of points acquired, and arranged to mathematically describe the surface 210.

In the panel 430 it is shown the two-dimensional derivative function ***f'*** in which it is possible to determine peaks ***kᵢ*** where the function ***f*'** has values higher than a predetermined threshold ***z_{T}*,** thus defining a region of interest ***R,*** and verifying, in the panel 440, that this region of interest ***R*** actually is a defective area.

Once verified that this region of interest ***R*** corresponds to an actual defective area 215, the geometry of this area 215 is analysed on the basis of some predetermined parameters, such as:
- position of the defect (x,y);
- length and width of the defective area;
- depth of the defective area.

On the basis of these parameters, the defect is recognized based on the consultation of a database containing a plurality of predetermined defect geometries.

In the event that the geometric parameters detected do not bring the defect back to any category in the database, this defect can be inserted into a new category, increasing the information present in the database. In this way there is a teaching procedure which allows to continuously improve the effectiveness of the system according to the present invention.

It is to be understood that the phraseology or terminology that is employed herein is for the purpose of description and not of limitation. The invention is defined by the appended claims.

## Claims

1. A system (100) for identification of defects on a surface (210) of at least a portion of a vehicle body (200), said system (100) comprising:
- an optical detection device (110) arranged to acquire data on the three-dimensional shape of said surface (210);
- a first moving means (120) arranged to drive said optical detection device (110);
- at least a control unit arranged to:
- localize said vehicle body (200) with respect to a predetermined reference system ***S;***
- drive said first moving means (120) to move said optical detection device (110) along a determined trajectory ***γ*** with respect to said predetermined reference system ***S;***
- receive said data on the three-dimensional shape of said surface (210) from said optical detection device (110);
- detect a possible defective area (215) on said surface (210) and define a three-dimensional geometry of said defective area (215);
- query and/or update a database arranged to associate a plurality of three-dimensional geometries of defective areas to relative predetermined typologies of defects;
- assign, on the basis of said database, a typology of defect to said defective area (215) detected;
said data on the three-dimensional shape of said surface (210) comprising a cloud of points ***pᵢ*** of said surface (210), to each point ***pᵢ*** being associated coordinates **(*xᵢ*,*yᵢ*,*zᵢ*)** defined with respect to said reference system ***S,***
said detecting of a possible defective area (215) comprising the steps of:
- analyse said cloud of points ***pᵢ*** for extrapolating a three-dimensional virtual geometry of said surface (210);
- associate said three-dimensional virtual geometry to a three-dimensional function ***f*** arranged to mathematically describe said surface (210);
- analyse said three-dimensional function ***f*** for detecting at least a possible defective area (215);
said system (100) **characterized in that** said analysis of said three-dimensional function ***f*** comprises the steps of:
- derive said three-dimensional function ***f*** obtaining a two-dimensional derivative function ***f*';**
- identify, in said two-dimensional derivative function ***f*',** peaks ***kᵢ*** wherein said function ***f*'** has values higher than a predetermined threshold ***z_{T}*;**
- define at least a region of interest ***R*** having an edge comprising a plurality of said peaks ***kᵢ*;**
- verify that said region of interest ***R*** is a defective area (215) .

2. The system (100) for identification of defects on a surface (210) of at least a portion of a vehicle body (200), according to claim 1, wherein said optical detection device (110) comprises a laser scanner (115) arranged to acquire said cloud of points *p*ᵢ of said surface (210).

3. The system (100) for identification of defects on a surface (210) of at least a portion of a vehicle body (200), according to claim 2, wherein said first moving means (120) comprises:
- at least two robotic links (121);
- at least one rotational joint (125) arranged to provide a rotation ***θ*** between said at least two robotic links (121) to allow a handling of said laser scanner (115) along said trajectory ***γ*;**
- at least one transducer of angular position arranged to measure said or each rotation ***θ*** of said or each rotational joint (125);
and wherein said control unit is arranged:
- to set a plurality of acquisition points ***γᵢ*,** along said trajectory ***γ*,** at which detecting said data on the three-dimensional shape of said surface (210) comprising said cloud of points ***pᵢ***;
- to set a time range ***τ*;**
- at each time range ***τ*:**
- to receive from said or each transducer of angular position said or each rotation ***θ*** of said or each rotational joint (125);
- on the basis of said or each rotation ***θ***, to compute a position of said laser scanner (115) with respect to said trajectory ***γ*** and, therefore, with respect to said predetermined reference system ***S,*** said computing of said position being made in a predetermined calculation time ***ε* ≤ *τ*;**
- when said position of said scanner laser (115) with respect to said trajectory ***γ*** corresponds to an acquisition point ***γᵢ*:**
- to receive from said laser scanner (115) said data on the three-dimensional shape of said surface (210);
- to associate said data on the three-dimensional shape of said surface (210) to said acquisition point ***γᵢ*.**

4. The system (100) for identification of defects on a surface (210) of at least a portion of a vehicle body (200), according to claim 1, wherein said optical detection device (110) comprises at least one camera (116) arranged to detect visual data on the three-dimensional shape of said surface (210).

5. The system (100) for identification of defects on a surface (210) of at least one portion of a body (200), according to claim 1, wherein a tactile sensor (117) is also provided arranged to detect data relating to the roughness of said surface (210).

6. The system (100) for identification of defects on a surface (210) of at least one portion of a body (200), according to claim 1, wherein a defect removal device (130) is also provided for carrying out a surface processing on said surface (210) at least at one defective area (215).

7. The system (100) for identification of defects on a surface (210) of at least one portion of a body (200), according to claim 6, wherein a second moving means (120') is provided arranged to actuate said defect removal device (130) and wherein said control unit is arranged to drive said second moving means (120') along a determined trajectory ***γ'*** with respect to said reference system ***S*** predetermined, on the basis of said step of localize said vehicle body (200) with respect to said predetermined reference system ***S*** and on the basis of said data on the three-dimensional shape of said surface (210).

8. The system (100) for identification of defects on a surface (210) of at least one portion of a body (200), according to claim 1, wherein said control unit is also arranged for carrying out a step of training and building of said database, by means of a data acquisition on the three-dimensional shape of said surface (210) at defective areas (215) of which is known a three-dimensional geometry and a corresponding typology of defect.

9. A method for identification of defects on a surface (210) of at least one portion of a body (200), said method comprising the steps of:
- localize said body (200) with respect to a reference system ***S*** predetermined;
- move an optical detection device (110) along a determined trajectory ***γ*** with respect to said predetermined reference system ***S;***
- acquire data on the three-dimensional shape of said surface (210) by said optical detection device (110);
- detect a possible defective area (215) on said surface (210) and define a three-dimensional geometry of said defective area (215);
- query and/or update a database arranged to associate a plurality of three-dimensional geometries of defective areas to relative predetermined typologies of defects;
- assign, on the basis of said database, a typology of defect to said defective area (215) detected;
said data on the three-dimensional shape of said surface (210) comprises a cloud of points ***pᵢ*** of said surface (210), to each point ***pᵢ*** being associated coordinates **(*xᵢ*,*yᵢ*,*zᵢ*)** defined with respect to said reference system ***S,***
said step of detect a possible defective area (215) comprising the steps of:
- analyse said cloud of points ***pᵢ*** for extrapolating a three-dimensional virtual geometry of said surface (210);
- associate said three-dimensional virtual geometry to a three-dimensional function ***f*** arranged to mathematically describe said surface (210);
- analyse said three-dimensional function ***f*** for detecting at a least a possible defective area (215);
said method **characterized in that** said step of analyse said three-dimensional function ***f*** comprises the steps of:
- derive said three-dimensional function ***f*** obtaining a two-dimensional derivative function ***f*';**
- identify, in said two-dimensional derivative function ***f*',** peaks ***kᵢ*** wherein said function ***f*'** has values higher than a predetermined threshold ***z_{T}*;**
- define at least a region of interest ***R*** having an edge comprising a plurality of said peaks ***kᵢ*;**
- verify that said region of interest ***R*** is a defective area (215) .

## Patentansprüche

1. System (100) zur Identifikation von Defekten auf einer Oberfläche (210) von mindestens einem Abschnitt einer Fahrzeugkarosserie (200), wobei das System (100) umfasst:
- eine optische Erfassungsvorrichtung (110), die eingerichtet ist, um Daten über die dreidimensionale Form der Oberfläche (210) zu erfassen;
- eine erste Bewegungseinrichtung (120), die eingerichtet ist, um die optische Erfassungsvorrichtung (110) anzutreiben;
- mindestens eine Steuereinheit, die eingerichtet ist, um:
- die Fahrzeugkarosserie (200) in Bezug auf ein vorbestimmtes Referenzsystem ***S*** zu lokalisieren;
- die erste Bewegungseinrichtung (120) anzutreiben, um die optische Erfassungsvorrichtung (110) entlang einer bestimmten Trajektorie ***γ*** in Bezug auf das vorbestimmte Referenzsystem ***S*** zu bewegen;
- die Daten über die dreidimensionale Form der Oberfläche (210) von der optischen Erfassungsvorrichtung (110) zu empfangen;
- einen möglichen defekten Bereich (215) auf der Oberfläche (210) zu erfassen und eine dreidimensionale Geometrie des defekten Bereichs (215) zu definieren;
- eine Datenbank abzufragen und/oder zu aktualisieren, die eingerichtet ist, um eine Vielzahl von dreidimensionalen Geometrien defekter Bereiche relativen vorbestimmten Defekttypologien zuzuordnen;
- auf der Grundlage der Datenbank eine Defekttypologie dem erfassten defekten Bereich (215) zuzuordnen;
wobei die Daten über die dreidimensionale Form der Oberfläche (210) eine Punktwolke ***pᵢ*** der Oberfläche (210) umfassen, wobei jedem Punkt ***pᵢ*** Koordinaten **(*xᵢ, yᵢ, zᵢ*)** zugeordnet sind, die in Bezug auf das Referenzsystem ***S*** definiert sind,
wobei das Erfassen eines möglichen defekten Bereichs (215) die Schritte umfasst:
- Analysieren der Punktwolke ***pᵢ*** zum Extrapolieren einer dreidimensionalen virtuellen Geometrie der Oberfläche (210);
- Zuordnen der dreidimensionalen virtuellen Geometrie zu einer dreidimensionalen Funktion ***f***, die zum mathematischen Beschreiben der Oberfläche (210) eingerichtet ist;
- Analysieren der dreidimensionalen Funktion ***f*** zum Erfassen von zumindest einem möglichen defekten Bereich (215);
wobei das System (100) **dadurch gekennzeichnet ist, dass** die Analyse der dreidimensionalen Funktion ***f*** die Schritte umfasst:
- Ableiten der dreidimensionalen Funktion ***f*** wobei eine zweidimensionale Ableitungsfunktion ***f*** erhalten wird;
- Identifizieren, in der zweidimensionalen Ableitungsfunktion ***f'***, von Spitzen ***kᵢ***, wobei die Funktion***f*** Werte aufweist, die höher sind als ein vorbestimmter Schwellenwert ***z_{T}***;
- Definieren von zumindest einem interessierenden Bereich ***R*** mit einer Kante, die eine Vielzahl der Spitzen ***kᵢ*** umfasst;
- Verifizieren, dass der interessierende Bereich ***R*** ein defekter Bereich ist (215).

2. System (100) zur Identifikation von Defekten auf einer Oberfläche (210) von mindestens einem Abschnitt einer Fahrzeugkarosserie (200) nach Anspruch 1, wobei die optische Erfassungsvorrichtung (110) einen Laserscanner (115) umfasst, der zum Erfassen der Punktwolke ***pᵢ*** der Oberfläche (210) eingerichtet ist.

3. System (100) zur Identifikation von Defekten auf einer Oberfläche (210) von mindestens einem Abschnitt einer Fahrzeugkarosserie (200) nach Anspruch 2, wobei die erste Bewegungseinrichtung (120) umfasst:
- mindestens zwei Roboterverbindungen (121);
- mindestens ein Drehgelenk (125), das eingerichtet ist, um eine Drehung ***θ*** zwischen den mindestens zwei Roboterverbindungen (121) bereitzustellen, um eine Handhabung des Laserscanners (115) entlang der Trajektorie ***γ*** zu ermöglichen;
- mindestens einen Winkelpositionswandler, der eingerichtet ist, um die oder jede Drehung ***θ*** des oder jedes Drehgelenks (125) zu messen;
und wobei die Steuereinheit eingerichtet ist, um:
- eine Vielzahl von Erfassungspunkten ***γᵢ*** entlang der Trajektorie ***γ*** festzulegen, an denen das Erfassen der Daten über die dreidimensionale Form der Oberfläche (210) die Punktwolke ***pᵢ*** umfasst;
- einen Zeitbereich ***τ*** festzulegen;
- bei jedem Zeitbereich ***τ*:**
- von dem oder jedem Winkelpositionswandler die oder jede Drehung ***θ*** des oder jedes Drehgelenks (125) zu empfangen;
- auf der Grundlage der oder jeder Drehung ***θ*** eine Position des Laserscanners (115) in Bezug auf die Trajektorie ***γ*** und daher in Bezug auf das vorbestimmte Referenzsystem ***S*** zu berechnen, wobei das Berechnen der Position in einer vorbestimmten Berechnungszeit ***ε*** ≤ ***τ*** erfolgt;
- wenn die Position des Scannerlasers (115) in Bezug auf die Trajektorie ***γ*** einem Erfassungspunkt ***γᵢ*** entspricht:
- von dem Laserscanner (115) die Daten über die dreidimensionale Form der Oberfläche (210) zu empfangen;
- die Daten über die dreidimensionale Form der Oberfläche (210) dem Erfassungspunkt ***γᵢ*** zuzuordnen.

4. System (100) zur Identifikation von Defekten auf einer Oberfläche (210) von mindestens einem Abschnitt einer Fahrzeugkarosserie (200) nach Anspruch 1, wobei die optische Erfassungsvorrichtung (110) mindestens ein Kamera (116) umfasst, die zum Erfassen visueller Daten über die dreidimensionale Form der Oberfläche (210) eingerichtet ist.

5. System (100) zur Identifikation von Defekten auf einer Oberfläche (210) von mindestens einem Abschnitt einer Karosserie (200) nach Anspruch 1, wobei auch ein Tastsensor (117) vorgesehen ist, der zum Erfassen von Daten bezüglich der Rauhigkeit der Oberfläche (210) eingerichtet ist.

6. System (100) zur Identifikation von Defekten auf einer Oberfläche (210) von mindestens einem Abschnitt einer Karosserie (200) nach Anspruch 1, wobei auch eine Defektentfernungsvorrichtung (130) zum Ausführen einer Oberflächenbearbeitung auf der Oberfläche (210) zumindest an einem defekten Bereich (215) vorgesehen ist.

7. System (100) zur Identifikation von Defekten auf einer Oberfläche (210) von mindestens einem Abschnitt einer Karosserie (200) nach Anspruch 6, wobei eine zweite Bewegungseinrichtung (120') vorgesehen ist, die eingerichtet ist, um die Defektentfernungsvorrichtung (130) zu betätigen, und wobei die Steuereinheit eingerichtet ist, um die zweite Bewegungseinrichtung (120') entlang einer bestimmten Trajektorie ***γ*'** in Bezug auf das vorbestimmte Referenzsystem ***S*** auf der Grundlage des Schritts des Lokalisierens der Fahrzeugkarosserie (200) in Bezug auf das vorbestimmte Referenzsystem ***S*** und auf der Grundlage der Daten über die dreidimensionale Form der Oberfläche (210) anzutreiben.

8. System (100) zur Identifikation von Defekten auf einer Oberfläche (210) von mindestens einem Abschnitt einer Karosserie (200) nach Anspruch 1, wobei die Steuereinheit auch zum Ausführen eines Trainings- und Aufbauschritts der Datenbank, mittels einer Datenerfassung über die dreidimensionale Form der Oberfläche (210) an defekten Bereichen (215), eingerichtet ist, von denen eine dreidimensionale Geometrie und eine entsprechende Defekttypologie bekannt sind.

9. Verfahren zur Identifikation von Defekten auf einer Oberfläche (210) von mindestens einem Abschnitt einer Karosserie (200), wobei das Verfahren die Schritte umfasst:
- Lokalisieren der Karosserie (200) in Bezug auf ein vorbestimmtes Referenzsystem ***S***;
- Bewegen einer optischen Erfassungsvorrichtung (110) entlang einer bestimmten Trajektorie ***γ*** in Bezug auf das vorbestimmte Referenzsystem ***S***;
- Erfassen von Daten über die dreidimensionale Form der Oberfläche (210) durch die optische Erfassungsvorrichtung (110);
- Erfassen eines möglichen defekten Bereichs (215) auf der Oberfläche (210) und Definieren einer dreidimensionalen Geometrie des defekten Bereichs (215);
- Abfragen und/oder Aktualisieren einer Datenbank, die eingerichtet ist, um eine Vielzahl von dreidimensionalen Geometrien defekter Bereiche relativen vorbestimmten Defekttypologien zuzuordnen;
- Zuordnen, auf der Grundlage der Datenbank, einer Defekttypologie zu dem erfassten defekten Bereich (215);
wobei die Daten über die dreidimensionale Form der Oberfläche (210) eine Punktwolke ***pᵢ*** der Oberfläche (210) umfassen, wobei jedem Punkt ***pᵢ*** Koordinaten **(*xᵢ, yᵢ, zᵢ*)** zugeordnet sind, die in Bezug auf das Referenzsystem ***S*** definiert sind,
wobei der Schritt des Erfassens eines möglichen defekten Bereichs (215) die Schritte umfasst:
- Analysieren der Punktwolke ***pᵢ*** zum Extrapolieren einer dreidimensionalen virtuellen Geometrie der Oberfläche (210);
- Zuordnen der dreidimensionalen virtuellen Geometrie zu einer dreidimensionalen Funktion ***f*,** die zum mathematischen Beschreiben der Oberfläche (210) eingerichtet ist;
- Analysieren der dreidimensionalen Funktion ***f*** zum Erfassen von zumindest einem möglichen defekten Bereich (215);
wobei das Verfahren **dadurch gekennzeichnet ist, dass** der Schritt des Analysierens der dreidimensionalen Funktion ***f*** die Schritte umfasst:
- Ableiten der dreidimensionalen Funktion ***f*,** wobei eine zweidimensionale Ableitungsfunktion ***f'*** erhalten wird;
- Identifizieren, in der zweidimensionalen Ableitungsfunktion ***f'*,** von Spitzen ***kᵢ*,** wobei die Funktion***f*** Werte aufweist, die höher sind als ein vorbestimmter Schwellenwert ***z_{T}*;**
- Definieren von zumindest einem interessierenden Bereich ***R*** mit einer Kante, die eine Vielzahl der Spitzen ***kᵢ*** umfasst
- Verifizieren, dass der interessierende Bereich ***R*** ein defekter Bereich (215) ist.

## Revendications

1. Système (100) permettant l'identification de défauts sur une surface (210) d'au moins une partie d'une carrosserie de véhicule (200), ledit système (100) comprenant :
- un dispositif de détection optique (110) servant à acquérir des données sur la forme tridimensionnelle de ladite surface (210) ;
- un premier moyen de déplacement (120) servant à entraîner ledit dispositif de détection optique (110) ;
- au moins une unité de commande servant à :
- localiser ladite carrosserie de véhicule (200) par rapport à un système de référence prédéfini ***S*** ;
- entraîner lesdits premiers moyens de déplacement (120) pour déplacer ledit dispositif de détection optique (110) le long d'une trajectoire ***γ*** prédéfinie par rapport audit système de référence ***S*** prédéfini ;
- recevoir lesdites données sur la forme tridimensionnelle de ladite surface (210) en provenance dudit dispositif de détection optique (110) ;
- détecter une zone défectueuse éventuelle (215) sur ladite surface (210) et définir une géométrie tridimensionnelle de ladite zone défectueuse (215) ;
- interroger et/ou mettre à jour une base de données servant à associer une pluralité de géométries tridimensionnelles de zones défectueuses à des typologies de défauts prédéfinies relatives ;
- attribuer, à partir de ladite base de données, une typologie de défaut à ladite zone défectueuse (215) détectée ;
lesdites données sur la forme tridimensionnelle de ladite surface (210) comprenant un nuage de points ***pᵢ*** de ladite surface (210), à chaque point ***pᵢ*** étant associées des coordonnées **(*xᵢ, yᵢ, zᵢ*)** définies par rapport audit système de référence ***S*,**
ladite détection d'une zone défectueuse éventuelle (215) comprenant les étapes de :
- analyse dudit nuage de points ***pᵢ*** pour extrapoler une géométrie virtuelle tridimensionnelle de ladite surface (210) ;
- association de ladite géométrie virtuelle tridimensionnelle à une fonction tridimensionnelle ***f*** servant à décrire mathématiquement ladite surface (210) ;
- analyse de ladite fonction tridimensionnelle ***f*** pour détecter au moins une zone défectueuse éventuelle (215) ;
ledit système (100) **étant caractérisé en ce que** ladite analyse de ladite fonction tridimensionnelle ***f*** comprend les étapes de :
- dérivation de ladite fonction tridimensionnelle ***f*** en obtenant une fonction dérivée bidimensionnelle ***f'***;
- identification, dans ladite fonction dérivée bidimensionnelle ***f'***, de pics ***kᵢ*** dans lesquels ladite fonction ***f'*** présente des valeurs supérieures à un seuil prédéfini ***z_{T}*** ;
- définition d'au moins une région d'intérêt ***R*** présentant un bord comprenant une pluralité desdits pics ***kᵢ*** ;
- vérification que ladite région d'intérêt ***R*** est une zone défectueuse (215).

2. Système (100) permettant l'identification de défauts sur une surface (210) d'au moins une partie d'une carrosserie de véhicule (200), selon la revendication 1, ledit dispositif de détection optique (110) comprenant un scanner laser (115) servant à acquérir ledit nuage de points ***pᵢ*** de ladite surface (210).

3. Système (100) permettant l'identification de défauts sur une surface (210) d'au moins une partie d'une carrosserie de véhicule (200), selon la revendication 2, lesdits premiers moyens de déplacement (120) comprenant :
- au moins deux liens robotiques (121) ;
- au moins une articulation rotative (125) servant à assurer une rotation ***θ*** entre lesdits au moins deux liens robotiques (121) pour permettre la manipulation dudit scanner laser (115) le long de ladite trajectoire ***γ*** ;
- au moins un transducteur de position angulaire servant à mesurer ladite ou chaque rotation ***θ*** de ladite ou de chaque articulation rotative (125) ;
et ladite unité de commande servant à :
- définir une pluralité de points d'acquisition ***γᵢ***, le long de ladite trajectoire ***γ***, au niveau desquels la détection desdites données sur la forme tridimensionnelle de ladite surface (210) comprenant ledit nuage de points ***pᵢ*** ;
- définir une plage de temps **τ** ;
- à chaque plage de temps **τ** :
- recevoir dudit ou de chaque transducteur de position angulaire ladite ou chaque rotation ***θ*** de ladite ou de chaque articulation rotative (125) ;
- en fonction de ladite ou de chaque rotation ***θ*,** calculer une position dudit scanner laser (115) par rapport à ladite trajectoire ***γ*** et, par conséquent, par rapport audit système de référence ***S*** prédéfini, ledit calcul de ladite position étant effectué en un temps de calcul prédéfini ***ε*** ≤ **τ** ;
- lorsque ladite position dudit laser scanner (115) par rapport à ladite trajectoire ***γ*** correspond à un point d'acquisition ***γᵢ*** :
- recevoir dudit scanner laser (115) lesdites données sur la forme tridimensionnelle de ladite surface (210) ;
- associer lesdites données sur la forme tridimensionnelle de ladite surface (210) audit point d'acquisition ***γᵢ*.**

4. Système (100) permettant l'identification de défauts sur une surface (210) d'au moins une partie d'une carrosserie de véhicule (200), selon la revendication 1, ledit dispositif de détection optique (110) comprenant au moins une caméra (116) servant à détecter des données visuelles sur la forme tridimensionnelle de ladite surface (210).

5. Système (100) permettant l'identification de défauts sur une surface (210) d'au moins une partie d'une carrosserie (200), selon la revendication 1, un capteur tactile (117) étant également pourvu de manière à servir à détecter des données relatives à la rugosité de ladite surface (210).

6. Système (100) permettant l'identification de défauts sur une surface (210) d'au moins une partie d'une carrosserie (200), selon la revendication 1, un dispositif d'élimination de défauts (130) étant également pourvu pour effectuer un traitement de surface sur ladite surface (210) au moins au niveau d'une zone défectueuse (215).

7. Système (100) permettant l'identification de défauts sur une surface (210) d'au moins une partie d'une carrosserie (200), selon la revendication 6, un second moyen de déplacement (120') étant pourvu de manière à servir à actionner ledit dispositif d'élimination de défauts (130) et ladite unité de commande servant à entraîner ledit second moyen de déplacement (120') le long d'une trajectoire ***γ'*** déterminée par rapport audit système de référence ***S*** prédéfini, en fonction de ladite étape de localisation de ladite carrosserie de véhicule (200) par rapport audit système de référence ***S*** prédéfini et en fonction desdites données sur la forme tridimensionnelle de ladite surface (210).

8. Système (100) permettant l'identification de défauts sur une surface (210) d'au moins une partie d'une carrosserie (200), selon la revendication 1, ladite unité de commande servant également à effectuer une étape d'apprentissage et de construction de ladite base de données, au moyen d'une acquisition de données sur la forme tridimensionnelle de ladite surface (210) au niveau de zones défectueuses (215) dont on connaît une géométrie tridimensionnelle et une typologie de défaut correspondante.

9. Procédé permettant l'identification de défauts sur une surface (210) d'au moins une partie d'une carrosserie (200), ledit procédé comprenant les étapes de :
- localisation de ladite carrosserie (200) par rapport à un système de référence ***S*** prédéfini ;
- déplacement d'un dispositif de détection optique (110) le long d'une trajectoire ***γ*** déterminée par rapport audit système de référence ***S*** prédéfini ;
- acquisition des données sur la forme tridimensionnelle de ladite surface (210) par ledit dispositif de détection optique (110) ;
- détection d'une zone défectueuse éventuelle (215) sur ladite surface (210) et définition d'une géométrie tridimensionnelle de ladite zone défectueuse (215) ;
- interrogation et/ou mise à jour d'une base de données servant à associer une pluralité de géométries tridimensionnelles de zones défectueuses à des typologies de défauts prédéfinies relatives ;
- attribution, à partir de ladite base de données, d'une typologie de défaut à ladite zone défectueuse (215) détectée ;
lesdites données sur la forme tridimensionnelle de ladite surface (210) comprenant un nuage de points ***pᵢ*** de ladite surface (210), à chaque point ***pᵢ*** étant associées des coordonnées ***(xᵢ, yᵢ*, *zᵢ*)** définies par rapport audit système de référence ***S,***
ladite étape de détection d'une zone défectueuse éventuelle (215) comprenant les étapes de :
- analyse dudit nuage de points ***pᵢ*** pour extrapoler une géométrie virtuelle tridimensionnelle de ladite surface (210) ;
- association de ladite géométrie virtuelle tridimensionnelle à une fonction tridimensionnelle ***f*** servant à décrire mathématiquement ladite surface (210) ;
- analyse de ladite fonction tridimensionnelle ***f*** pour détecter au moins une zone défectueuse éventuelle (215) ;
ledit procédé **étant caractérisé en ce que** ladite étape d'analyse de ladite fonction tridimensionnelle ***f*** comprend les étapes de :
- dérivation de ladite fonction tridimensionnelle ***f*** en obtenant une fonction dérivée bidimensionnelle ***f'*** ;
- identification, dans ladite fonction dérivée bidimensionnelle ***f'***, de pics ***kᵢ*** dans lesquels ladite fonction ***f'*** présente des valeurs supérieures à un seuil ***z_{T}*** prédéfini ;
- définition d'au moins une région d'intérêt ***R*** possédant un bord comprenant une pluralité desdits pics ***kᵢ*** ;
- vérification que ladite région d'intérêt ***R*** est une zone défectueuse (215).
